**Europäisches Patentamt**

**European Patent Office**

**Office européen des brevets**

(11) Veröffentlichungsnummer: **0 082 214**
**B1**

# (12) EUROPÄISCHE PATENTSCHRIFT

(45) Veröffentlichungstag der Patentschrift:
22.05.85

(21) Anmeldenummer: 81110669.9

(22) Anmeldetag: 22.12.81

(51) Int. Cl.⁴: **C 09 D 5/46**, C 25 D 13/06

(54) Verfahren zur Herstellung von wärmehärtenden, kathodisch abscheidbaren, wässrigen Elektrotauchlacken und deren Verwendung.

(43) Veröffentlichungstag der Anmeldung:
29.06.83 Patentblatt 83/26

(45) Bekanntmachung des Hinweises auf die Patenterteilung:
22.05.85 Patentblatt 85/21

(84) Benannte Vertragsstaaten:
AT BE DE FR GB IT NL SE

(56) Entgegenhaltungen:
DE - A - 2 752 198
FR - A - 2 264 066

(73) Patentinhaber: **Lackwerke Wülfing GmbH + Co.,**
**Stackenbergstrasse 34, D-5600 Wuppertal 11 (DE)**

(72) Erfinder: **Schröder, Manfred, Dr., Im Grund 3,**
**D-5804 Herdecke (DE)**
Erfinder: **Subramanyam, Arty Ramaiyer T.,**
**Quellenstrasse 24, D-5600 Wuppertal 1 (DE)**

(74) Vertreter: **Keller, Johanna Carola et al, Deichmannhaus**
**am Hauptbahnhof, D-5000 Köln 1 (DE)**

ACTORUM AG

## Beschreibung

Die Erfindung betrifft ein Verfahren zur Herstellung von wärmehärtenden, kathodisch abscheidbaren, wässerigen Lacken, die stickstoffbasische Bindemittel enthalten, und deren bevorzugte Verwendung bei der kathodischen Elektrotauchlackierung (Beschichtung) von Gegenständen aus Metall, insbesondere solchen aus Eisenmetallen.

In neuerer Zeit hat neben der anodischen Elektrotauchlackierung die kathodische Elektrotauchlackierung zunehmend an Bedeutung gewonnen. Die Gründe hierfür sind vorwiegend im deutlich besseren Korrosionsschutzverhalten der Beschichtungen auf Eisensubstraten zu suchen, insbesondere bei relativ dünnen Lackfilmstärken von 10 bis 20 μm. Hier versagen die besten anodischen Beschichtungen selbst bei einer Eisenphosphatierung, einer gemischten Eisen-/Calciumphosphatierung sowie einer Zinkphosphatierung, auch wenn sich dabei jeweils eine Nachspülung mit Chromsäure anschliesst.

Gerade bei derart vorbehandelten Eisensubstraten, die zusätzlich mit Chrom(VI)- oder Chrom-(III)lösungen nachgespült worden sind, zeigen die kathodisch abgeschiedenen und thermisch gehärteten Lackfilme derart hohe Korrosionsschutzwerte, dass beispielsweise die Zeitbelastung (ASTM-B64-117) auf das etwa Zwei- bis Dreifache gegenüber den anodischen Beschichtungen angehoben werden kann. Als Gründe hierfür werden unter anderem zwei wesentliche Unterschiede zwischen kathodischer und anodischer Elektrotauchlackierung angesehen. Zum einen handelt es sich bei den Trägerharzen der kathodischen Elektrotauchlacke um vorwiegend stickstoffbasische Bindemittel, im Gegensatz zu den Carboxylgruppen aufweisenden Bindemitteln der anodischen Elektrotauchlacken, wobei diese stickstoffbasischen Bindemittel, wie viele aminhaltige Verbindungen oder Polymeren, korrosionsinhibierende Wirkung aufweisen. Zum anderen findet bei der kathodischen Elektrotauchlackierung auf dem entsprechend kathodisch geschalteten metallischen Substrat bei der Elektrolyse als Primärvorgang eine Reduktion bzw. Freisetzung von Wasserstoff statt, während am anodisch geschalteten Substrat eine Oxidation bzw. Sauerstoffentwicklung vonstatten geht. Theoretisch können demzufolge bei der kathodischen Beschichtung keine Metallionen durch Oxidation aus dem Substrat freigesetzt werden, wie dies bei der anodischen Beschichtung am anodisch geschalteten Substrat der Fall ist. Dementsprechend findet man in den anodisch abgeschiedenen Lackfilmen das Vielfache an Substrat-Metallionen-Konzentration gegenüber den kathodisch abgeschiedenen Lackfilmen.

Stickstoffbasische Bindemittel bzw. Trägerharze, wie sie in den bisher im Einsatz befindlichen kationischen Elektrotauchlacken verwendet werden, sowie Verfahren zur Herstellung dieser Bindemittel sind in zahlreichen Veröffentlichungen beschrieben worden. Es handelt sich bei diesen bekannten Trägerharzen vorwiegend um stickstoffbasische Bindemittel, die fremdvernetzende oder selbstvernetzende kondensierende Eigenschaften aufweisen und demzufolge bei der thermischen Härtung der abgeschiedenen Lackfilme die unterschiedlichsten Kondensations- oder Spaltprodukte abgeben. Beispielsweise seien in diesem Zusammenhang die DE-AS Nr. 1546840, die DE-OS Nrn. 2002756, 2252536, 2541801, 2620612 und 3014290, die US-PS Nrn. 3799854, 3947358, 3984299, 4033917 und 4036800 sowie die Europäische Patentveröffentlichung EP Nr. 0039425 genannt.

Den meisten kationischen Elektrotauchlacken, die von diesen bekannten Bindemitteln abgeleitet sind, haften noch einige schwerwiegende Mängel an. So ist beispielsweise der Anteil an Spaltprodukten bei der thermischen Härtung der abgeschiedenen nassen Lackfilme bei $180 \pm 20°C$ Objekttemperatur beträchtlich. Bezogen auf $1\,h/105°C$ desolvatisierte Beschichtungen werden beim Aushärten bei 160 bis 200°C Lackfilmgewichtsverluste von 15 bis 20% gemessen (s. beispielsweise D. Saatweber, „Automobilindustrie" 1/79, 71-76). Dieser relativ hohe Anteil an Spaltprodukten, nämlich beispielsweise Wasser, Formaldehyd, $C_1$- bis $C_8$-Alkohole oder Amine, schmälert die Lackfilmausbeute und belastet ausserdem durch die entsprechende Emission der Einbrennöfen die Umwelt.

Darüber hinaus hat sich gezeigt, dass derartige kationische Elektrotauchlacke für die Autokarosserielackierung beträchtliche Probleme im Mehrschichtlackaufbau in bezug auf das Haften der Schichten mit sich bringen können, wenn der abgeschiedene Primer nicht ausreichend ausgehärtet ist. Um dies tatsächlich zu erreichen, sind bei den gewünschten Trockenfilmdicken von 15 bis 20 μm zur Zeit Einbrennbedingungen von mindestens 20 min bei 180°C Umlufttemperatur erforderlich.

Ein weiterer wesentlicher Nachteil der kathodischen Beschichtungen war bisher auch noch die den hohen Anforderungen der Autoindustrie nicht entsprechende Korrosionsschutzwirkung auf entfettetem oder geöltem Stahlblech bei einer Trockenfilmdicke im Bereich von 5 bis 20 μm.

Da bei der Elektrotauchlackierung von Karosserien oder von Klein- oder Ersatzteilen die vorherige Entfettung sowie die Phosphatierung nicht immer alle Innenflächen bzw. schwer zugänglichen Hohlräume oder Teile erreichen, wird seit langem angestrebt, dass die kationischen Lacke auch solche Stellen gut benetzen und die abgeschiedenen, gehärteten Lackfilme gute korrosionsschützende Eigenschaften aufweisen. Während mit den bisher bekannten kationischen Elektrotauchlacken die dazu primär erforderlichen guten Umgriffeigenschaften zwar im wesentlichen erreicht werden, werden diese Elektrotauchlacke den Anforderungen hinsichtlich der geölten Eisenflächen und der damit verbundenen Haftung und den Korrosionsschutzwerten der thermisch gehärteten Lackfilme nur sehr wenig, in manchen Fällen überhaupt nicht gerecht.

Vor einiger Zeit hat man nun versucht, den Korrosionsschutz der kathodischen Beschichtungen auf nicht vorbehandeltem Stahl zu verbessern, indem man den entsprechenden fremd- oder selbstvernetzenden Lacksystemen bleihaltige Pigmente oder/und bestimmte Metallverbindungen hinzugefügt hat. So beschreibt beispielsweise die DE-OS Nr. 2457437 die zusätzliche Verwendung wasserlöslicher Salze der Metalle Kobalt, Nickel, Cadmium, Zinn, Antimon, Zink oder Kupfer, die DE-AS Nr. 2814439 die Zugabe einer wasserlöslichen Bleiverbindung, insbesondere eines Bleisalzes einer organischen Carbonsäure.

In anderen Veröffentlichungen wird vorwiegend die Verwendung wasserunlöslicher, bestimmte Reaktionen auslösender Metallverbindungen in kationischen Elektrotauchlacken beschrieben. Doch während die Beschreibung der DE-OS Nr. 2541234 für polyisocyanathaltige Bindemittel anorganische und organische Metallverbindungen lediglich als bekannte Härtungskatalysatoren erwähnt, dienen gemäss der Europäischen Patentveröffentlichung EP Nr. 0012463 wasserunlösliche Salze oder Komplexe der unterschiedlichsten Metalle, insbesondere des Bleis, als Umesterungskatalysatoren in den hauptsächlich beanspruchten Zweikomponenten-Bindemittel-Systemen.

Allen diesen bekannten kationischen Elektrotauchlacken mit Salzen oder Komplexen von Schwermetallen oder Erdalkalimetallen haften zwei wesentliche Nachteile an. Im Falle wasserlöslicher Metallsalze im Lack, wie beispielsweise Kupferacetat oder Bleiacetat, werden durch diese Salze bei den relevanten Metallkonzentrationen die elektrischen Leitwerte des Lackes erhöht und gleichzeitig die pH-Werte gesenkt. Da sich auch noch der Filmwiderstand des sich abscheidenden Lackfilms erniedrigt, wird schliesslich die Umgriffeigenschaft des Elektrotauchlackes verschlechtert. Zum anderen passieren die wasserlöslichen Metallsalze bei der beim Elektrotauchlackieren heute üblichen Ultrafiltration die Membranen etwa in der gleichen Konzentration, wie sie im Lack vorhanden sind. Dagegen werden im Falle wasserunlöslicher Metallverbindungen im Lack, wie beispielsweise der Oktoate, Naphtenate oder Acetylacetonate, diese Verbindungen zum Teil wegen ihres niedrigen Molekulargewichtes und der verbesserten Löslichkeit durch die im Elektrotauchlack vorhandenen Lösemittel, teilweise aber auch nach entsprechender Verseifung in Form ihrer dann wasserlöslichen Salze ebenfalls bei der Ultrafiltration durch die Membranen abgeführt. In beiden Fällen enthalten die Ultrafiltrate beträchtliche Mengen umweltschädlicher Metallsalze, so dass bei Einleitung des Ultrafiltrats in die Industrieabwässer diese Metallsalze zuvor mittels Koagulations-/Flockungssystemen ausgefällt werden müssen. Die filtrierten Schlämme werden dann als Sondermüll in entsprechend zugelassenen Sonderdeponien gelagert.

Da aber heute ein Teil des Ultrafiltrats auch zum Abspülen der austauchenden Karossen oder Karossenteile verwendet und dem Elektrotauchbekken wieder zugeführt wird (sog. *closed loop system*), ist eine Regelung und Kontrolle der Metallkonzentration im Lack und damit im sich abscheidenden Lackfilm sehr schwierig. Dies wird besonders deutlich, wenn man berücksichtigt, dass bei bleihaltigen kationischen Elektrotauchlacken im Ultrafiltrat heute Blei(II)konzentrationen von 200 bis 400 ppm und im Industrieabwasser nach der Bleifällung und Filtration Blei(II)konzentrationen von etwa 0,2 ppm (0,2 mg/l) gefunden werden (s. beispielsweise „Farbe+Lack", 87 [2], 1981, S. 98).

Aufgabe der vorliegenden Erfindung war es, wärmehärtende, kathodisch abscheidbare, wässerige Elektrotauchlacke verfügbar zu machen, bei deren Einsatz zum einen die Haftung der kathodischen Beschichtungen insbesondere auf nichtphosphatiertem Stahlblech, das an der Oberfläche teilweise auch Ziehöle enthält, verbessert und damit gleichzeitig ein deutlich besserer Korrosionsschutz erzielt wird. Zum anderen sollten erfindungsgemäss die in Zusammenhang mit den Emissionen der Spaltprodukte beim Einbrennen sowie den Metallsalzemissionen über das Ultrafiltrat bestehenden Probleme der bisher bekannten kathodisch abscheidbaren Elektrotauchlacke beseitigt oder zumindest deutlich verringert werden.

Die Lösung dieser Aufgabe ist sowohl ein Verfahren zur Herstellung derart verbesserter wärmehärtender, kathodisch abscheidbarer, wässeriger Elektrotauchlacke als auch deren bevorzugte Verwendung zur Beschichtung leitender metallischer Gegenstände, die überwiegend Eisen enthalten.

Dieses Verfahren ist erfindungsgemäss dadurch gekennzeichnet, dass man ein stickstoffbasisches Bindemittel, welches tertiäre Aminogruppen sowie primäre oder/und sekundäre OH-Gruppen enthält, mit in Wasser schwer- oder unlöslichen Metallverbindungen von Kobalt, Kupfer, Blei, Nickel oder/und Mangan bei Temperaturen zwischen 100 und 150°C unter Inertgas umsetzt, anschliessend in an sich bekannter Weise mit Säure protonisiert und mit Wasser verdünnt.

Als in Wasser schwer- oder unlösliche Metallverbindungen werden beim Verfahren gemäss der Erfindung bevorzugt Oktoate, Naphthenate, Borate oder/und Acetylacetonate der genannten Metalle verwendet, d.h. diese können einzeln oder im Gemisch eingesetzt werden.

Diese Metallverbindungen werden, auf Metallgehalt berechnet, in Mengen von 0,05 bis 5, vorzugsweise von 0,1 bis 2 Gew.-%, auf 100%iges stickstoffbasisches Bindemittel eingesetzt.

Beim Verfahren gemäss der Erfindung werden stickstoffbasische Bindemittel verwendet, deren Aminzahlen im Bereich zwischen 40 und 400, bevorzugt jedoch zwischen 60 und 200 liegen. Besonders geeignete stickstoffbasische Bindemittel mit tertiären Aminogruppen sind die, die in der oben bereits erwähnten Europäischen Patentveröffentlichung EP Nr. 0039425 näher beschrieben sind.

Die Umsetzung der stickstoffbasischen Bindemittel mit den Metallverbindungen wird, wie bereits erwähnt, bei Temperaturen zwischen 100 und 150°C unter Inertgas durchgeführt. Bei diesen Temperaturen liegt das Bindemittel je nach seiner Viskosität als 100%iges Harz oder aber gelöst in Lösemitteln wie beispielsweise Glykoläthern, Alkoholen oder deren Gemischen vor. Die Metallverbindungen werden vorzugsweise als Lösungen in geeigneten Lösemitteln eingesetzt. Je nach Menge der verwendeten Metallverbindungen sind bei den genannten Temperaturen bei guter Homogenisierung mittels Rührer oder ähnlichen Dispergier-/Homogenisiervorrichtungen Behandlungszeiten von 1 bis max. 4 h erforderlich.

Die erfindungsgemäss in der Wärme mit den Metallverbindungen behandelten stickstoffbasischen Bindemittel oder deren Lösungen sind bei Temperaturen bis 50°C relativ stabil. Sie können entweder direkt zu kathodisch abscheidbaren Elektrotauchlacken weiterverarbeitet oder aber für eine spätere Verwendung in geeigneter Weise gelagert werden, ohne dass die Eigenschaften der daraus hergestellten Elektrotauchlacke gemäss der Erfindung wesentlich beeinträchtigt werden.

Im Anschluss an die beschriebene Umsetzung der stickstoffbasischen Bindemittel mit mindestens einer für die jeweilig optimale Lackanwendung erforderlichen Metallverbindung in der Wärme werden die Produkte in die gebrauchsfertigen, kathodisch abscheidbaren, wässerigen Elektrotauchlacke in an sich bekannter Weise überführt, indem man mit Säure protonisiert und mit Wasser verdünnt. Im einzelnen kann man zur Gewinnung der gebrauchsfertigen Elektrotauchlacke wie folgt vorgehen:

Um beispielsweise bei pigmentierten Lacken eine optimale Benetzung der Pigment- und Füllstoffoberfläche zu erzielen, wird der für die Vermahlung bzw. Dispergierung benötigte kleinere Anteil des stickstoffbasischen Bindemittels zu einem möglichst hohen Prozentsatz seines Aminäquivalentes mit Säure neutralisiert. Bei Verwendung einer geeigneten organischen Säure, beispielsweise Ameisensäure, Essigsäure oder/und Milchsäure, kann dieser Prozentsatz bis zu 100% betragen, doch sollte er möglichst bei 60 bis 80% liegen. Da der Gesamtneutralisationsgrad des N-basischen Bindemittels im gebrauchsfertigen Lack aber zwischen 10 und 60, vorzugsweise zwischen 20 und 40% liegt, wird das sogenannte Auflack-Bindemittel-Konzentrat zu einem entsprechend niedrigeren Prozentsatz des Aminäquivalentes neutralisiert. Hier liegen die entsprechenden Neutralisationsgrade bei 10 bis 40, vorzugsweise zwischen 20 und 30%.

Im Hinblick darauf, dass das erfindungsgemäss mit geeigneten Metallverbindungen behandelte stickstoffbasische Bindemittel als Pigmentpaste-Anreibeharz, als Auflackharz oder aber in beiden Lackvorprodukten einsetzbar ist, kann auf die oben beschriebene Weise der Gesamtmetallgehalt des gebrauchsfertigen Lackes und somit das Eigenschaftsbild der kathodisch daraus abgeschiedenen und thermisch gehärteten Lackfilme massgeblich beeinflusst werden.

Die erfindungsgemäss erhaltenen wärmehärtenden, kathodisch abscheidbaren, wässerigen Elektrotauchlacke bringen in vieler Hinsicht deutliche Verbesserungen und Vorteile gegenüber denen des Standes der Technik.

Neben den genannten funktionellen Gruppen können in den stickstoffbasischen Bindemitteln auch noch sekundäre oder/und primäre Amino- oder/und Säureamidgruppen enthalten sein.

Darüber hinaus zeigen die thermisch gehärteten Lackfilme der Elektrotauchlacke gemäss der Erfindung insbesondere auf nicht phosphatierten Eisenmetallen, selbst wenn diese schlecht oder kaum entfettet worden sind, deutlich verbesserte Haftungseigenschaften und Korrosionsschutzwirkung bei Trockenfilmdicken von 5 bis 20 µm.

Den erfindungsgemäss hergestellten Elektrotauchlacken mit stickstoffbasischen Bindemitteln, die gemäss dem Verfahren der Erfindung mit den Metallverbindungen umgesetzt worden sind, können auch noch weitere, teilweise wärmereaktive Harzkomponenten wie beispielsweise Phenol- oder/und Aminoharze beigemischt werden. Als pigmentierte Lacke enthalten sie ausserdem die für wässerige Elektrotauchlacke üblichen geeigneten Pigmente und Füllstoffe sowie ggf. notwendige Dispergier- oder/und Netzmittel, um optimale Lack- und Lackfilmeigenschaften zu gewährleisten. Dagegen kann auf die bei bekannten Lacken übliche Verwendung von blei-, strontium- und chromathaltigen Pigmenten bei den wärmehärtenden, kathodisch abscheidbaren, wässerigen Elektrotauchlacken gemäss der Erfindung vollständig verzichtet werden.

Als weitere, jedoch wesentliche Vorteile gegenüber den Lacken des Standes der Technik sind schliesslich die mit den Abluft- und Abwasseremissionen in Zusammenhang stehenden Eigenschaften der erfindungsgemäss hergestellten Elektrotauchlacke zu nennen. Bezogen auf die Einbrennemissionen der kathodischen Metallbeschichtungen bedeutet dies eine deutliche Herabsetzung sowohl von kohlenstoffhaltigen Spaltprodukten als auch von Wasser und damit verbunden einen erheblich geringeren Frischluft- und Energiebedarf der Einbrennöfen und der Nachverbrennungsanlagen. Während nämlich beispielsweise die aus den bisher bekannten Elektrotauchlacken kathodisch abgeschiedenen Lackfilme nach einer bei 105°C in 1 h vorgenommenen Desolvatisierung bei der anschliessenden Aushärtung von weniger als 20 min bei 170°C Objekttemperatur bis 30 min bei 200°C Objekttemperatur noch etwa 15 bis 20 Gew.-% Spaltprodukte abgeben, liegen die Vergleichswerte der Elektrotauchlacke gemäss der Erfindung bei ca. 5 bis 10 Gew.-% in Abhängigkeit davon, ob lediglich ein fremdvernetzendes Harz allein oder aber selbst-/fremdvernetzende Harzkomponenten im Lack verwendet wurden.

Bei den bisher bekannten und technisch eingesetzten kathodisch abscheidbaren Elektrotauchlacken sind bekanntlich die im Zusammenhang mit dem Abwasser von kathodischen Elektrotauchanlagen bestehenden Emissionsprobleme beträchtlich. Dies ist darauf zurückzuführen, dass sich das Abwasser einer Anlage für die Elektrotauchlackierung aus dem Lackaustrag, dem zu verwerfenden Ultrafiltrat und schliesslich dem Spülwasser einer abschliessenden Wasserspülung mit voll entsalztem Wasser zusammensetzt und somit diese Abwässer insgesamt und gemeinsam einer Spezialwasseraufbereitung zu unterwerfen sind. Neben der Ausfällung niedermolekularer Harzanteile kommt hierbei der Ausflockung von Schwermetallverbindungen, insbesondere solcher, die Blei, Kupfer oder andere umweltschädliche Metalle enthalten, besondere Bedeutung zu, zumal die nahezu quantitative Fällung der Metalle dabei in direkter Proportionalität zwischen ihrer Konzentration und der verwendeten Menge an Fällungsoder/und Flockungsmittel steht. Demgegenüber enthalten überraschenderweise die erfindungsgemäss hergestellten metallhaltigen Elektrotauchlacke in ihrer wässerigen Phase deutlich weniger, ja in den meisten Fällen sogar keine Metallionen mehr gelöst, was zur Folge hat, dass auch die entsprechenden Ultrafiltrate solcher Lacke keine oder zumindest wesentlich weniger Metallsalze enthalten, als dies bei den bisher bekannten kathodisch abscheidbaren Elektrotauchlacken der Fall ist. Somit werden bei der Aufbereitung der Abwässer aus den Anlagen der Elektrotauchlackierung, bei denen die erfindungsgemäss hergestellten Elektrotauchlacke Verwendung finden, wesentlich weniger Fällungs- und Flockungsmittel benötigt.

Bei der Verwendung der erfindungsgemäss hergestellten wärmehärtenden, kathodisch abscheidbaren, wässerigen Elektrotauchlacke liegen die kathodischen Beschichtungsspannungen im Bereich von 50 bis 500 V, zur Erzielung optimaler Lackfilmdicken von 10 bis 20 µm im allgemeinen im Bereich von 100 bis 400 V.

Die thermische Aushärtung der aus den Elektrotauchlacken gemäss der Erfindung kathodisch abgeschiedenen Lackfilme, bezogen auf die Objekttemperaturen, erfolgt zweckmässig bei 150 bis 200, vorzugsweise bei 160 bis 180°C, bei Einbrennzeiten von 60 bis 10 min.

Durch die nachfolgenden Beispiele wird die Erfindung weiter erläutert, wobei Teile als Gewichtsteile und Prozente als Gewichtsprozente zu verstehen sind.

*Beispiele*

Es wurden zunächst Vergleichsversuche an Klarlacken, also unpigmentierten Lacken, mit einem thermisch nicht härtenden, fremdvernetzenden stickstoffbasischen Bindemittel durchgeführt. Dabei sollte festgestellt werden, in welchem Masse ein erfindungsgemäss behandeltes stickstoffbasisches Bindemittel und daraus hergestellte Elektrotauchlacke bei der thermischen Härtung der Beschichtungen filmvernetzende Eigenschaften aufweisen. Ausserdem sollten noch die Einbrennemissionen durch Bestimmen des Gewichtsverlustes gegenüber den bei 105°C während 1 h desolvatisierten Beschichtungen ermittelt werden.

Als fremdvernetzendes stickstoffbasisches Bindemittel mit tertiären Aminogruppen wurde das in der Europäischen Patentveröffentlichung EP Nr. 0039425 in den Beispielen I/II-1 näher beschriebene Harz verwendet.

A. *Herstellung des Harzes*

In einem mit Rührer, Thermometer, Rückflusskühler und Tropftrichter ausgestatteten Vierhalskolben werden 224 g (2,2 mol) Dimethylaminopropylamin unter Inertgas (Stickstoff) auf 130°C aufgeheizt. 1400 g einer 75%igen Xylollösung eines Epoxidharzes mit einem Epoxiäquivalentgewicht von 525 (Produkt DER 671 der Dow Chemical) werden innerhalb von 2 bis 3 h unter Rühren zugetropft. Das Reaktionsgemisch wird so lange bei 130°C gehalten, bis ein Epoxidwert von 0 erreicht ist. Anschliessend werden überschüssiges Amin und Xylol unter Vakuum abdestilliert, worauf 52 g (0,4 mol) Allylglycidyläther innerhalb ½ h bei 150°C zugetropft und das Gemisch eine weitere Stunde bei 150°C unter Rühren umgesetzt wird, worauf das Adduktharz mit Äthylglykol auf einen Festkörpergehalt von 70 Gew.-% eingestellt wird.

572 g dieses 70%igen Adduktharzes werden im Vierhalskolben unter Inertgas (Stickstoff) auf 130°C erwärmt. Nunmehr wird unter Rühren ein Gemisch aus 80 g Äthylhexylacrylat und 20 g Hydroxypropylmethacrylat sowie 2 g Ditert.-butylperoxyd innerhalb von 2 h zugetropft und das Gemisch weitere 3 h unter Rühren bei 130°C gehalten.

Es wird ein Copolymerisat mit einem Festkörperanteil von ca. 74% erhalten. Die Viskosität einer 50%igen Lösung in Äthylglykol beträgt bei 20°C 1360 mm²/s. Die Aminzahl des Festharzes beträgt 120. Das Harz ist nach partieller Neutralisation (25% der Aminzahl) mit 10%iger Essigsäure unbegrenzt wasserverdünnbar und weist in 10%iger Lösung einen pH-Wert von 6,5 auf. In einer Zelle für die Elektrotauchlackierung wird auf einem kathodisch geschalteten Stahlblech bei 150 V ein Niederschlag erhalten, der sich jedoch bis 180°C nicht thermisch härten lässt und von Lösungsmitteln leicht angelöst wird.

Bei den Versuchen gemäss der Erfindung wurde das in Äthylglykol gelöste Harz mit verschiedenen Metallverbindungen und mit deren Gemischen unter Stickstoffatmosphäre 2 h bei 130°C gerührt. Aus daraus durch Neutralisation mit 10%iger Essigsäure (25% des Aminäquivalentes) und Verdünnen mit destilliertem Wasser hergestellten 10%igen Elektrotauchlacken wurden wie beim metallfreien Klarlack Stahlbleche bei 150 V kathodisch beschichtet und thermisch gehärtet.

In der Vergleichstabelle 1, in der auch die Einbrenntemperaturen angegeben sind, sind die Versuchsergebnisse zusammengefasst.

Zur Ermittlung der Durchhärtung und Vernetzung der abgeschiedenen und eingebrannten Lackfilme mit einer Trockenfilmdicke von 20 µm wurde ein mit Methyläthylketon getränkter Wattebausch auf dem Lackfilm unter leichtem Druck hin- und herbewegt. Dabei ist die Anzahl der bis zur Filmerweichung infolge Anlösung erforderlichen Hübe proportional der Filmvernetzung (Vernetzungsgrad).

*Tabelle 1*

| Versuch Nr. | Metall-verbindung | Gew.-% Metall, bezogen auf 100% Bindemittel | Einbrennverlust 30 min (Gew.-%) | | Vernetzungsgrad nach Einbrennen (30 min/180° C) Zahl der Hübe |
|---|---|---|---|---|---|
| | | | 180° C | 200° C | |
| 1 | — | — | 9 | 11 | — |
| 2 | Co-borat (18%ig) | 0,3 | 7 | 9,7 | 102 |
| 3 | Pb-oktoat (18%ig) | 2 | 7,6 | 10,2 | 60 |
| 4 | Cu-naphthenat (8%ig) | 0,5 | 7,2 | 10,0 | 71 |
| 5 | (Co-borat / Cu-naphthenat) | (0,3 / 0,5) | 6,8 | 9,4 | 125 |

Um den technischen Fortschritt der erfindungsgemäss hergestellten Elektrotauchlacke besonders deutlich zu machen, wurden folgende Eigenschaften schwarz pigmentierter Lacke geprüft:

1. Das *Korrosionsschutzverhalten* in relativ dünnen Lackfilmstärken von $10 \pm 5$ µm auf zinkphosphatierten und mit Chromsäure gespülten Stahlblechen (a), auf gut entfetteten Stahlblechen (b) sowie auf geölten Stahlblechen (c).

Für die Prüfungen wurde die Umgriffsmethode EU BI 20-2C nach Ford angewandt, wobei jeweils zwei entsprechende Metallbleche von 30×10,5 c zu einer Umgriffsbox verklebt wurden. Bei der Beschichtung der Umgriffsbleche wurde je nach Metallsubstrat diejenige Abscheidungsspannung gewählt, die bei allen Umgriffinnenflächen annähernd vergleichbare Beschichtungshöhe in Zentimetern, gemessen vom unteren Blechrand, sowie vergleichbare Lackfilmstärken in verschiedenen Abständen, ebenfalls vom unteren Blechrand gemessen, ergab.

Nach der Aushärtung der beschichteten Umgriffsbleche innerhalb 20 min bei 180° C im Umluftofen wurden diese 240 h einer Salznebelbelastung nach ASTM B 117-64 unterworfen, um anschliessend die Korrosionsgrenze der Beschichtungen zu ermitteln.

2. Das *Abluftemissionsverhalten* der Beschichtungen, die 30 min bei 180° C und 30 min bei 200° C im Umluftofen gehärtet wurden.

Die auf eine Trockenfilmdicke von ca. 18 bis 20 µm bezogene relative Einbrennemission wurde ermittelt, indem die Nassbeschichtungen 1 h bei 105° C desolvatisiert wurden, bevor sie anschliessend der thermischen Härtung unterworfen wurden. Durch Rückwaage konnte dann der relative Einbrennverlust in Gewichtsprozenten des ungehärteten, desolvatisierten Filmes ermittelt werden.

3. Das *Ultrafiltratemissionsverhalten* der schwermetallhaltigen, kathodisch abscheidbaren Elektrotauchlacke in Abhängigkeit von der Art der Metallverbindung(en) sowie der Form ihrer Einarbeitung in den Lack.

Im Vergleich zur erfindungsgemässen Einarbeitung metallhaltiger Verbindungen wurden die gleichen Metalle in der gleichen Konzentration (Gew.-% Metall, bezogen auf 100%iges stickstoffbasisches Bindemittel) entsprechend den Ansprüchen und Beispielen der DE-OS Nr. 2457437, DE-AS Nr. 2814439 sowie der Europäischen Patentveröffentlichung EP Nr. 0012463 in den schwarzen Elektrotauchlack eingearbeitet. Nach 72stündiger Rührdauer bei Raumtemperatur wurden die Lacke einer Ultrafiltration mittels einer Dürr-Abcor-Anlage (Membrantyp HFM 163) unterworfen. Die Ultrafiltrate wurden auf ihren Metallgehalt quantitativ analysiert.

Im einzelnen wurde wie folgt verfahren:

Für alle Versuche wurde als stickstoffbasisches Bindemittel wiederum das fremdvernetzende, oben unter A beschriebene Harz verwendet, aus dem zunächst für alle Versuche eine Pigmentpaste hergestellt wurde.

B. *Herstellung der Pigmentpaste (schwarz)*

100 Teile des 74%igen Copolymerisatharzes A, das mit 10%iger Essigsäure zu 80% seines Aminäquivalentes neutralisiert worden ist, wurden mit destilliertem Wasser auf einen Festkörpergehalt von 20% verdünnt, anschliessend mit 370 Teilen eines Pigment/Füllstoff-Gemisches, bestehend aus

300 Teilen BaSO$_4$
20 Teilen Russ
50 Teilen TiO$_2$ (Rutil-Typ)

unter einem Schnellrührer vordispergiert und anschliessend in einer Perlmühle feindispergiert. Die erhaltene wässerige Pigmentpaste mit einem Festkörpergehalt von ca. 60% wies einen pH-Wert von 5,4 auf.

*Vergleichsversuche 6 bis 9*

Für alle vier Versuche wurden 674 Teile des nicht verdünnten Harzes A mit 300 Teilen eines in der phenolischen OH-Gruppe mit Allylalkohol verätherten Phenolresols (Methylon 75108 der General Electric) unter dem Schnellrührer ½ h bei 40° C gut gemischt, anschliessend mit 10%iger Essigsäure zu 25% des Aminäquivalentes neutralisiert und schliesslich zusammen mit der Pigmentpaste B zu einem Lackkonzentrat mit einem Pigment/Bindemittel-Verhältnis von 0,26 : 1 unter dem Schnellrührer 1 h gut homogenisiert.

Für die Vergleichsversuche 6 und 7 wurde mit destilliertem Wasser langsam verdünnt und auf einen Lackfestkörpergehalt von 16% eingestellt. Anschliessend wurde gemäss der DE-AS Nr. 2814439 Metallverbindungen Bleiacetatlösung (Versuch 6) und gemäss DE-OS Nr. 2457437 wässerige Kupferacetatlösung (Versuch 7) eingerührt.

Beim Vergleichsversuch 8 wurde gemäss EP Nr. 0012463 die Bleioktoatlösung vor der Verdünnung mit destilliertem Wasser bei 40°C eindispergiert.

Bei dem Vergleichsversuch 9 schliesslich wurde als Nullversuch ohne jegliche Metallverbindung gearbeitet.

Die bei Raumtemperatur 72 h gealterten Lackbäder mit 16% Festkörpergehalt wurden auf pH- und elektrischen Leitwert geprüft, und anschliessend wurden die Umgriffseigenschaften nach der Ford-Spezifikation EU BI 20-2C auf zinkphosphatierten, chromsäuregespülten Blechen a, auf entfettetem Stahlblech b sowie geöltem Stahlblech c bestimmt.

Von bei 300 V beschichteten Stahlblechen wurden jeweils die Einbrenngewichtsverluste nach 30 min bei 180 bzw. 200°C ermittelt.

In den entsprechenden Ultrafiltraten der Lacke 6 bis 9 wurden die Metallkonzentrationen quantitativ bestimmt.

Die Ergebnisse der Vergleichsversuche 6 bis 9 sind in der Tabelle 2 wiedergegeben.

*Versuche nach der Erfindung 10 bis 12*

Die in den Versuchen 3 bis 5 der Tabelle 1 aufgeführten metallhaltigen, erfindungsgemäss modifizierten Bindemittel des Harzes A wurden, wie in den Vergleichsversuchen 6 bis 9 beschrieben, mit dem wärmereaktiven Phenolharz gut homogenisiert, mit 10%iger Essigsäure zu 25% des Aminäquivalentes neutralisiert und anschliessend mit der schwarzen Pigmentpaste B wiederum zu einem Lackkonzentrat mit einem Pigment/Bindemittel-Verhältnis von 0,26: 1 homogenisiert. Die daraus mit destilliertem Wasser auf einen Festkörpergehalt von 16% eingestellten Elektrotauchlacke 10 bis 12 wurden, wie in den Vergleichsversuchen 6 bis 9 beschrieben, geprüft. Die Versuchsergebnisse sind ebenfalls in Tabelle 2 aufgeführt.

*Tabelle 2*

| Versuch Nr. | Metallverbindung (% Metallgehalt) in der Lösung) | Gew.-% Metall, bezogen auf 100% N-basisches Bindemittel | Lackparameter bei 25°C | | Ford-Umgriff ASTM B 117-64 Blech | | | Einbrennverlust 30 min (Gew.-%) | | Metall im Ultrafiltrat (ppm) |
|---|---|---|---|---|---|---|---|---|---|---|
| | | | pH | Leitwert (µS cm⁻¹) | a | b | c | 180°C | 200°C | |
| 6 | Pb-acetat/H₂O (4,4% Pb) | 2 | 6,0 | 1500 | 12 | 8 | 4 | 8,0 | 10,0 | 730 |
| 7 | Cu-actat/H₂O (3% Cu) | 0,5 | 6,3 | 1250 | 11 | 6 | 4 | 7,9 | 10,1 | 30 |
| 8 | Pb-oktoat/Testbenzin (18% Pb) | 2,0 | 6,3 | 1300 | 14 | 9 | 5 | 8,2 | 10,2 | 690 |
| 9 | — | — | 6,5 | 1200 | 11 | 6 | 2 | 8,2 | 10,2 | — |
| 10 | Pb-oktoat/Testbenzin (18% Pb) | 2 | 6,4 | 1250 | 17 | 12 | 8 | 7,0 | 9,3 | 150 |
| 11 | Cu-naphthenat/Testbenzin (8% Cu) | 0,5 | 6,4 | 1200 | 16 | 10 | 6 | 6,8 | 9,0 | ≤5 |
| 12 | Cu-naphthenat/T. (8% Cu) Co-borat/Testbenzin (18% Co) | (0,5 / 0,3) | 6,4 | 1210 | 18 | 13 | 10 | 6,5 | 8,6 | ≤5 / ≤10 |

## Patentansprüche

1. Verfahren zur Herstellung von wärmehärtenden, kathodisch abscheidbaren, wässerigen Elektrotauchlacken, dadurch gekennzeichnet, dass man ein stickstoffbasisches Bindemittel, welches tertiäre Aminogruppen sowie primäre oder/und sekundäre OH-Gruppen enthält und dessen Aminzahl im Bereich zwischen 40 und 400 liegt, mit in Wasser schwer- oder unlöslichen Metallverbindungen von Kobalt, Kupfer, Blei, Nickel oder/und Mangan bei Temperaturen zwischen 100 und 150°C unter Inertgas umsetzt, anschliessend in an sich bekannter Weise mit Säure protonisiert und mit Wasser verdünnt.

2. Verfahren nach Anspruch 1, dadurch gekennzeichnet, dass man als in Wasser schwer- oder unlösliche Metallverbindungen Oktoate, Naphthenate, Borate oder/und Acetylacetonate verwendet.

3. Verfahren nach den Ansprüchen 1 und 2, dadurch gekennzeichnet, dass man die Metallverbindungen, auf Metallgehalt berechnet, in Mengen von 0,05 bis 5, vorzugsweise von 0,1 bis 2 Gew.-%

auf 100%iges stickstoffbasisches Bindemittel einsetzt.

4. Verfahren nach den Ansprüchen 1 bis 3, dadurch gekennzeichnet, dass man den Neutralisationsgrad der Bindemittel, bezogen auf die Aminzahl, auf 10 bis 60, vorzugsweise 20 bis 40%, mit Säuren einstellt.

5. Verfahren nach den Ansprüchen 1 bis 4, dadurch gekennzeichnet, dass man zusätzlich wärmereaktive Phenol- oder/und Aminoharze zusetzt.

6. Verwendung der wärmehärtenden, kathodisch abscheidbaren Elektrotauchlacke nach den Ansprüchen 1 bis 5 in Form von auf einen Festkörpergehalt von 5 bis 25 Gew.-% mit Wasser verdünnten Lacken mit pH-Werten von 5 bis 8, vorzugsweise von 6 bis 7.

## Claims

1. A method of producing heat-curable, cathodically depositable aqueous electro-deposition lacquers, characterized in that a nitrogen-containing basic binder containing tertiary amino groups and primary or/and secondary OH groups and having an amine value in the range between 40 and 400 is reacted at temperatures between 100 and 150°C under an inert gas with metal compounds of cobalt, copper, lead, nickel or/and manganese which are sparingly soluble or insoluble in water, followed by protonizing it in a manner known *per se* with an acid and diluting it with water.

2. A method according to Claim 1, characterized in that octoates, naphthenates, borates or/and acetyl acetonates are used as metal compounds which are sparingly soluble or insoluble in water.

3. A method according to Claims 1 and 2, characterized in that the metal compounds, calculated on the metal content, are used in quantities of 0.05 to 5% by weight and preferably of 0.1 to 2% by weight based on 100% nitrogen-containing basic binder.

4. A method according to Claims 1 to 3, characterized in that the degree of neutralization of the binders, based on the amine value, is adjusted with acids to 10 to 60% and preferably to 20 to 40%.

5. A method according to Claims 1 to 4, characterized in that heat-reactive phenolic or/and amino resins are additionally added.

6. Use of the heat-curable, cathodically depositable electro-deposition lacquers according to Claims 1 to 5 in the form of lacquers diluted with water to a solids content of 5 to 25% by weight and having pH values of 5 to 8 and preferably of 6 to 7.

## Revendications

1. Procédé de préparation de vernis électrophorétiques aqueux, thermodurcissables, se déposant à la cathode, caractérisé en ce qu'on fait réagir sous gaz inerte, à des températures entre 100 et 150°C, un liant à basicité liée à l'azote, renfermant des groupes amino tertiaires ainsi que des groupes OH primaires et/ou secondaires et dont l'indice d'amine se situe dans le domaine de 40 à 400, avec des composés métalliques de cobalt, de cuivre, de plomb, de nickel et/ou de manganèse difficilement solubles ou insolubles dans l'eau; on protone ensuite de façon connue en soi avec de l'acide et on dilue avec de l'eau.

2. Procédé selon la revendication 1, caractérisé en ce qu'on utilise comme composés métalliques difficilement solubles ou insolubles dans l'eau des octoates, des naphténates, des borates et/ou des acétylacétonates.

3. Procédé selon les revendications 1 et 2, caractérisé en ce qu'on met en œuvre les composés métalliques, calculés sur la teneur en métal, en des quantités de 0,05 à 5% en poids, de préférence de 0,1 à 2% en poids, par rapport au liant à basicité liée à l'azote à 100%.

4. Procédé selon les revendications 1 à 3, caractérisé en ce qu'on ajuste le degré de neutralisation du liant, rapporté à l'indice d'amine, entre 10 et 60%, de préférence entre 20 et 40%, avec des acides.

5. Procédé selon les revendications 1 à 4, caractérisé en ce qu'on ajoute en outre des résines phénoliques et/ou aminées thermoréactives.

6. Utilisation des vernis électrophorétiques thermodurcissables se déposant à la cathode selon les revendications 1 à 5 sous forme de peintures diluées jusqu'à un extrait sec de 5 à 25% en poids avec de l'eau, à des valeurs de pH de 5 à 8, de préférence de 6 à 7.